(19) Europäisches Patentamt
European Patent Office
Office européen des brevets

(11) **EP 2 216 108 B1**

(12) **EUROPEAN PATENT SPECIFICATION**

(45) Date of publication and mention
of the grant of the patent:
**27.07.2016 Bulletin 2016/30**

(51) Int Cl.:
***C25D 5/26*** *(2006.01)*    ***F16L 9/16*** *(2006.01)*
***B21C 37/09*** *(2006.01)*

(21) Application number: **08853343.5**

(22) Date of filing: **26.11.2008**

(86) International application number:
**PCT/JP2008/071376**

(87) International publication number:
**WO 2009/069614 (04.06.2009 Gazette 2009/23)**

(54) **MULTIPLEX-WOUND STEEL PIPE**

MEHRFACH GEWUNDENES STAHLROHR

TUYAU EN ACIER À ENROULEMENT MULTIPLEX

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.11.2007 JP 2007308551**

(43) Date of publication of application:
**11.08.2010 Bulletin 2010/32**

(73) Proprietor: **Sanoh Kogyo Kabushiki Kaisha
Tokyo 150 0013 (JP)**

(72) Inventors:
• **JINNOUCHI, Yutaka
Koga-shi
Ibaraki 306-0041 (JP)**
• **YAMASHITA, Yusuke
Koga-shi
Ibaraki 306-0041 (JP)**
• **SUZUKI, Jirou
Koga-shi
Ibaraki 306-0041 (JP)**

(74) Representative: **Liesegang, Eva
Boehmert & Boehmert
Anwaltspartnerschaft mbB
Patentanwälte Rechtsanwälte
Pettenkoferstrasse 20-22
80336 München (DE)**

(56) References cited:
**EP-A1- 0 576 733**    **EP-A1- 1 488 865**
**JP-A- 52 030 754**    **JP-A- 2005 095 976**

**Description**

TECHNICAL FIELD

The present invention relates to a multiwall steel tube and, more particularly, to a multiwall steel tube for use in brake piping on an automobile and in hydraulic systems of industrial machinery.

BACKGROUND ART

Multiwall steel tubes capable of withstanding high pressure are used widely in brake piping on automobiles and piping for hydraulic machines. A multiwall steel tube is formed by winding a cold-rolled steel sheet of a low-carbon steel round a roll.

A steel sheet having both surfaces coated by plating respectively with copper films is used as a material for forming a multiwall steel tube. The steel sheet is wound round a roll in a tube and then the tube is heated for brazing at a temperature not lower than the melting point of copper in a reducing atmosphere.

The conventional multiwall steel tube is formed by winding a steel sheet having both surfaces respectively coated with plated copper films of the same thickness. Therefore, the amount of copper for brazing is excessively large.

Since the amount of copper produced by the plated copper films on both the surfaces of the steel sheet wound in two layers is excessively large for brazing, the excessive copper solidifies on the surface of the steel tube and the copper dripped in the furnace adheres to the steel tube again. Consequently, a steel tube having a bad appearance is produced.

In forming the conventional multiwall steel tube, the surface of the steel tube is coated with carbon prior to brazing to prevent the solidification of the excessive copper on the surface of the steel tube. It has been pointed out that the carbon remaining on the surface of the steel tube reduces the cleanliness of the surface of the steel tube and causes troubles in the following surface treatment because it is difficult to remove the carbon coating the surface of the steel tube completely after brazing.

Some other conventional multilayer steel tube, such as a multilayer steel tube mentioned in Patent document JP 2005-095976 A, is formed by processing a steel sheet having one surface coated with a plated copper film.

It is mentioned in this Patent document that the advantageous effects of plating only the one surface of the steel sheet are the improvement of the cleanliness of the surface owing to the disuse of carbon, improvement of radiant heat conductivity and saving power necessary for brazing.

European patent application EP 1 488 865 A1 discloses a multiwall steel tube formed by winding a steel sheet having opposite first and second surface sides coated with copper-tin alloy films at a thickness ratio of ¼ and bonded by brazing. A similar multiwall steel tube and manufacturing method is known from EP 0 576 733 A1.

DISCLOSURE OF THE INVENTION

Problem to be Solved by the Invention

When the multiwall steel tube is formed by processing the steel sheet having both surfaces respectively coated with the copper films by plating, it is highly possible that unbonded parts called voids are formed in the multiwall steel tube when the multiwall steel tube is subjected to brazing because the gap between the adjacent layers of the steel sheet is big, an excessively large fillet is formed along the seam, and a big step formed in the seam causes troubles in connecting the multiwall steel tube.

In some cases, a copper fillet is not formed along the seam of a multiwall steel tube formed by processing a steel sheet having one surface coated with a copper film by plating, which reduces the strength.

Accordingly, it is an object of the present invention to solve the problems in the prior art and to provide a multiwall steel tube capable of providing a proper amount of copper necessary for brazing in a step of manufacturing the multiwall steel tube, of avoiding the solidification of copper on the surface thereof, and of forming a satisfactory fillet along the seam of the steel tube to prevent spoiling the appearance and forming a brazed part having high strength, and to provide a method of manufacturing such a multiwall steel tube.

Means for Solving the Problem

The present invention provides a multiwall steel tube formed by winding a steel sheet having opposite first and second surfaces respectively coated with copper films by plating round a roll in a tube and bonding together the layers of the steel sheet by brazing, wherein the copper film coating the first surface has a thickness $t_1$, the copper film coating the second surface has a thickness $t_2$ greater than the thickness $t_1$, and the steel sheet is wound such that the first surface faces outside. The thickness t1 of the copper film coating the first surface satisfies $0 < t1 \leq 3$ $\mu$m, and the thickness t2 of the copper film coating the second surface satisfies $3$ $\mu$m $\leq t2 \leq 6$ $\mu$m. A ratio of the thickness t1 to the thickness t2 is in a range expressed by the inequality $1/3 \leq t1/t2 \leq 2/3$.

The present invention provides a method of manufacturing a multiwall steel tube including the steps of winding a steel sheet having opposite first and second surfaces respectively coated with copper films round a roll in a tube, and bonding together the layers of the steel sheet by brazing, wherein the copper film coating the first surface has a thickness t1, the copper film coating the second surface has a thickness t2 greater than the thickness t1, the steel sheet is wound such that the first surface faces outside, and the step of bonding together the layers of the steel sheet by brazing heats the steel tube at a temperature not lower than the melting point of copper in a reducing atmosphere. The thickness t1 of the copper film coating the first surface satisfies $0 < t1 \leq 3$ $\mu$m, and the thickness t2 of the copper film coating the second surface satisfies $3$ $\mu$m $\leq t2 \leq 6$ $\mu$m. A ratio of the thickness t1 to the thickness t2 is in a range expressed by the inequality $1/3 \leq t1/t2 \leq 2/3$.

Effect of the Invention

According to the present invention, a proper amount of copper necessary for brazing can be supplied during the process of manufacturing the multiwall steel tube, the solidification of copper on the surface of the steel tube is avoided, and a satisfactory fillet is formed along the seam of the steel tube to prevent spoiling the appearance, and a brazed part having high strength can be formed.

BRIEF DESCRIPTION OF THE DRAWINGS

Fig. 1 is a sectional view of a steel sheet for forming a multiwall steel tube according to the present invention.
Fig. 2 is a cross-sectional view of a multiwall steel tube in a preferred embodiment according to the present invention.
Fig. 3 is a view of fillets formed in seams of multiwall steel tubes according to the present invention.

BEST MODE FOR CARRYING UT THE INVENTION

A multiwall steel tube in a preferred embodiment according to the present invention will be described with reference to the accompanying drawings.

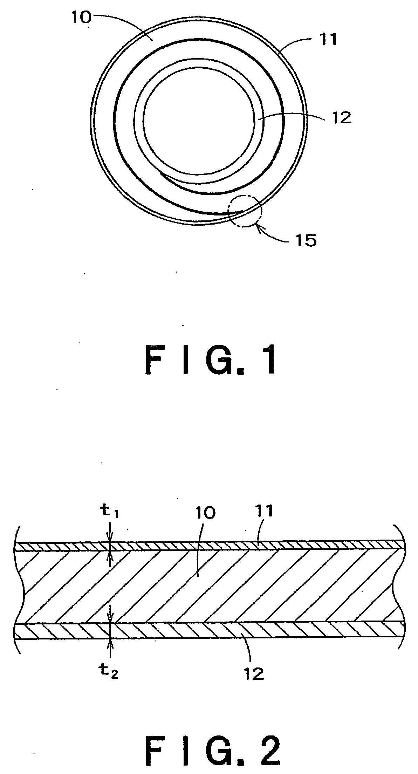

Fig. 1 is a cross-sectional view of a multiwall steel tube in a preferred embodiment according to the present invention and Fig. 2 is a sectional view of a steel sheet for forming the multiwall steel tube shown in Fig. 1.

A steel sheet 10 is a cold-rolled steel sheet of a low-carbon steel. The steel sheet 10 has opposite first and second surfaces respectively coated with copper films 11 and 12 by electroplating called differential thickness plating. The copper films 11 and 12 respectively coating the first and the second surface have different thicknesses, respectively.

The copper film 11 formed on the first surface of the steel sheet 10 has a thickness t1 and the copper film 12 formed on the second surface of the steel sheet 10 has a thickness t2 greater than the thickness t1.

The thickness t1 ($\mu$m) of the copper film on the first surface meets a condition expressed by the following inequality.

$$0 < t1 \leq 3$$

The thickness t2 ($\mu$m) of the copper film formed on the second surface meets a condition expressed by the following inequality.

$$3 \leq t2 \leq 6$$

Further description of the respective thicknesses t1 and t2 of the plated copper films 11 and 12 will be made in connection with the description of the preferred embodiment.

The steel sheet 10 is wound in multiple layers round a forming roll in a tube. The steel sheet 10 is wound round the forming roll with the copper film 11 having the smaller thickness t1 facing inside and the copper film 12 having the greater thickness t2 facing outside, preferably, in two layers.

The intermediate multiwall steel tube in process of manufacture is delivered to a heating furnace for carrying out a brazing process.

The heating furnace holds the intermediate multiwall steel tube at a temperature not lower than 1083°C equal to the melting point of copper in a reducing atmosphere for brazing.

When the intermediate multiwall steel tube is thus heated, the plated copper films 11 and 12 melt. The molten copper serves as a brazing filler metal to braze the adjacent layers of the steel sheet 10 to form a steel tube. The outside surface of the steel tube is coated by a copper film by plating.

A high-frequency induction brazing method that heats the multiwall steel tube for brazing by a current induced in the multiwall steel tube by a current supplied to a coil surrounding the multiwall steel tube and a Joule heat brazing method that heats the steel tube by Joule heat generated by directly connecting terminals to the steel tube and supplying a current through the steel tube are possible brazing method other than the foregoing furnace brazing method.

The multiwall steel tube in this embodiment formed by winding the steel sheet 10 having the opposite surfaces plated with copper by differential plating has the following effects.

First, the steel sheet 10 having the first and the second surface coated, respectively, with the copper films 11 and 12 respectively having different thicknesses t1 and t2, as compared with a steel sheet having opposite surfaces respectively coated with copper films of the same thickness, can avoid supplying an excessively large amount of copper for brazing. Therefore, an awkward condition of the outside surface resulting from the resolidification of the excessive copper in copper drops on the surface of the steel tube can be moderated. Since the awkward condition resulting from the resolidification of copper can be moderated, noise that may be generated during a quality inspection process can be reduced and hence the sensitivity of an eddy current flaw detector can be raised to achieve accurate inspection.

Since coating the surface of the intermediate multiwall steel tube with carbon prior to brazing, which is needed by the prior art, is unnecessary, it is possible to solve problems of reducing the cleanliness of the surface of the steel tube by carbon remaining on the surface of the steel tube and causing difficulties in the following surface treatment process because of difficulty in completely removing the carbon coating the surface of the steel tube after brazing.

Since the steel sheet is plated by differential thickness plating, the adjacent layers of the steel sheet 10 are spaced properly apart from each other when the steel sheet 10 is wound in the steel tube, the formation of voids in the multiwall steel tube can be prevented when the multiwall steel tube is subjected to brazing and a brazed part has high strength. Thus, the multiwall steel tube of the present invention can be used as a tube for automotive brake piping which requires a pressure rating of 35 MPa or above.

Secondly, since the multiwall steel tube in this embodiment is formed by winding the steel sheet plated by differential thickness plating round the forming roll such that the thinner copper film 11 faces outside, a satisfactory copper fillet can be formed along the seam 15 of the multiwall steel tube when multiwall steel tube is processed by brazing.

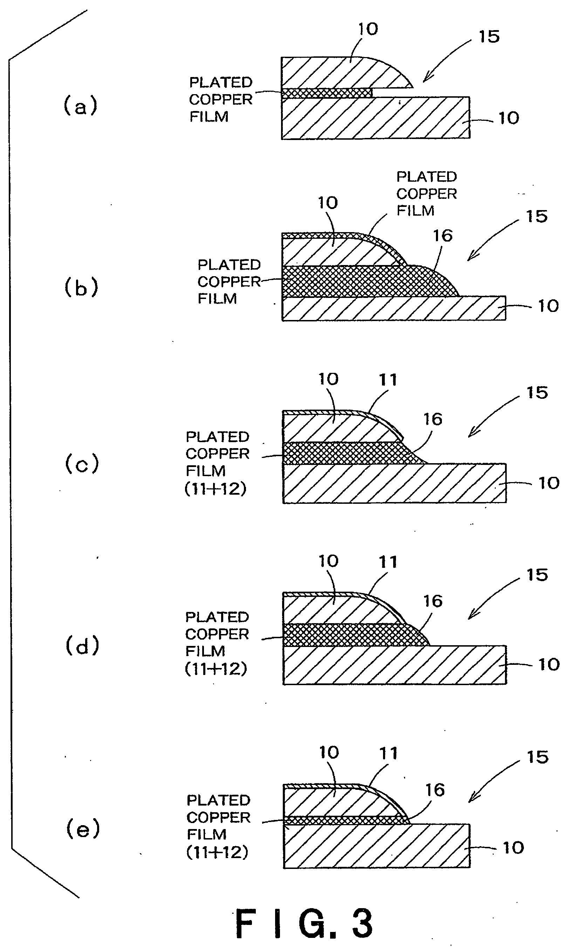

Figs. 3(a) to 3(d) show different fillets formed when 0.4 mm thick differently plated steel sheets were used.

Fig. 3(a) shows a seam 15 formed in a multiwall steel tube formed by using a steel sheet 10 having only one copper-plated surface. In most cases, any fillet is not formed when a steel sheet 10 having only one copper-plated steel sheet is used because the amount of copper is insufficient.

Fig. 3(b) shows an excessively large fillet 16 formed when a steel sheet 10 having both the surfaces coated with copper films of the same thickness was used. Since the copper films of the same thickness were superposed between the adjacent layers of the steel sheet 10, copper was supplied also from the outside copper film, an excessively large amount of copper formed the excessively large fillet 16. Such an excessively large fillet 16 reduces the strength of the seam 15.

Fig. 3(c) shows a satisfactory fillet 16 formed by using a steel sheet 10 plated by differential thickness plating and winding the steel sheet 10 with the thinner copper film having the thickness t1 facing outside. Since the thickness of a copper layer between the adjacent layers of the steel sheet 10 was comparatively small, a proper amount of copper formed the satisfactory seam 16. Such a fillet was formed when the thickness t1 was 2 $\mu$m and the thickness t2 was 4 $\mu$m.

Fig. 3(d) shows a fillet 16 formed by using a steel sheet 10 plated by differential thickness plating and winding the steel sheet 10 with the thinner copper film having the thickness t1 facing outside. Although the fillet 16 was large as compared with the fillet shown in Fig. 3(c), the fillet 16 was comparatively satisfactory. Such a fillet was formed when the thickness t1 was 3 $\mu$m and the thickness t2 was 6 $\mu$m.

Fig. 3(e) shows a fillet 16 formed by using a steel sheet 10 plated by differential thickness plating and winding the steel sheet 10 with the thinner copper film having the thickness t1 facing outside. Although the fillet 16 was small as compared with the fillet shown in Fig. 3(c), the fillet 16 was comparatively satisfactory. Such a fillet was formed when the thickness t1 was 1 $\mu$m and the thickness t2 was 3 $\mu$m.

Use of the steel sheet plated by differential thickness plating has the following advantages.

It is expected that the steel sheet plated by differential thickness plating is resistant to rusting during transportation and that the multiwall steel tube formed by using the steel sheet plated by differential thickness plating has an outside surface coated with the copper film and hence the multiwall steel tube is resistant to rusting during transportation. Since the outside surface of the steel tube is coated with the copper film, the steel tube can be stably brazed by Joule heat brazing that supplies a current directly through the steel tube. The multiwall steel tube formed by winding the steel sheet plated by differential thickness plating, differing from a multiwall steel tube formed by winding a steel sheet having only one copper-plated surface, can be brazed by bonding films of the same metal and the layers of the steel sheet can be closely bonded together by brazing similarly to those of a steel sheet having surfaces respectively coated with films of the same thickness. Friction between the steel sheet plated by differential thickness plating and the forming roll, as compared with that between a steel sheet having one copper-plated surface and the forming roll, in winding the steel sheet is low and hence the possibility of seizure is reduced.

The steel sheet plated by differential thickness plating, as compared with a steel sheet having surfaces respectively coated with copper films of the same thickness, takes in a less amount of hydrogen produced during copper plating and hence the effect of hydrogen on quality deterioration can be reduced.

Examples

The effect of the thicknesses of the copper films formed by differential thickness plating on the formation of a fillet will be described in connection with examples.

Table 1

| | | Thickness t1($\mu$m) | | | | | |
|---|---|---|---|---|---|---|---|
| | | 0 | 2 | 4 | 6 | 8 | 10 |
| Thickness t2 ($\mu$m) | 0 | $\times$ Excessively small | $\times$ Excessively small | $\times$ Excessively small | $\times$ Excessively small | $\times$ Excessively large | $\times$ Excessively large |
| | 2 | $\times$ Excessively small | $\bigcirc$ Good | $\bigcirc$ Good | $\triangle$ Large | $\times$ Excessively large | $\times$ Excessively large |
| | 4 | $\times$ Excessively small | $\circledcirc$ Optimum | $\bigcirc$ Good | $\triangle$ Large | $\times$ Excessively large | $\times$ Excessively large |
| | 6 | $\times$ Excessively small | $\bigcirc$ Good | $\triangle$ Large | $\times$ Excessively large | $\times$ Excessively large | $\times$ Excessively large |
| | 8 | $\times$ Excessively large | $\times$ Excessively large | $\times$ Excessively large | $\times$ Excessively large | $\times$ Excessively large | $\times$ Excessively large |
| | 10 | $\times$ Excessively large | $\times$ Excessively large | $\times$ Excessively large | $\times$ Excessively large | $\times$ Excessively large | $\times$ Excessively large |

Table 1 shows the respective qualities of fillets formed in multiwall steel tubes formed by winding 0.4 mm thick steel sheets having outer and inner surfaces coated with copper films having thicknesses shown in Table 1 in two-wall steel tubes, respectively, and subjecting steel tubes thus formed to brazing.

It is known from Table 1 and Fig. 3 showing fillets that a satisfactory fillet can be formed when the thickness of a copper film coating the outside surface of the steel tube is thin, the preferable thickness t1 ($\mu$m) of the copper film coating the outside surface meets a condition expressed by: $1 \le t1 \le 3$, and the thickness t2 ($\mu$m) of the copper film coating the inside surface meets a condition expressed by: $3 \le t2 \le 6$.

It was found that the ratio of the thickness t1 of the copper film coating the outside surface to the thickness t2 of the copper film coating the inside surface, in consideration of forming a fillet, is in a desirable range expressed the following inequality.

$$1/3 \le t1/t2 \le 2/3$$

## Claims

1. A multiwall steel tube formed by winding a steel sheet (10) said steel sheet (10) having opposite first and second surfaces respectively coated with copper films (11, 12) by plating, around a forming roll into a tube and bonding together the layers of the steel sheet (10) by brazing, wherein the copper film (11) coating the first surface has a thickness t1, the copper film (12) coating the second surface has a thickness t2 greater than the thickness t1, and the steel sheet (10) is wound such that the first surface faces outside,
wherein the ratio of the thickness t1 to the thickness t2 is in a range expressed by an inequality:

$$1/3 \leq t1/t2 \leq 2/3;$$

and wherein the thickness t1 of the copper film (11) coating the first surface meets a condition expressed by:

$$0 < t1 \leq 3 \ \mu m;$$

and wherein the thickness t2 of the copper film (12) coating the second surface meets a condition expressed by:

$$3 \ \mu m \leq t2 \leq 6 \ \mu m.$$

2. Use of the multiwall steel tube according to claim 1 as a brake tube having a pressure rating of 35 MPa or above for vehicles.

3. A multiwall steel tube manufacturing method of manufacturing a multiwall steel tube formed by winding a steel sheet (10) having copper-plated surfaces around a forming roll into a tube and bonding together the layers of the steel sheet (10) by brazing, said method comprising the steps of:

preparing a steel sheet (10) having a first surface coated with a copper film (11) of a thickness t1 and a second surface coated with a copper film (12) of a thickness t2 greater than the thickness t1;
winding the steel sheet (10) around a forming roll into a steel tube such that the first surface faces outside; and
bonding together the layers of the steel sheet (10) of the steel tube by brazing that heats the steel tube at a temperature not lower than the melting point of copper in a reducing atmosphere,
wherein the ratio of the thickness t1 to the thickness t2 is in a range expressed by an inequality:

$$1/3 \leq t1/t2 \leq 2/3;$$

and
wherein the thickness t1 of the copper film (11) coating the first surface meets a condition expressed by:

$$0 < t1 \leq 3 \ \mu m;$$

and
wherein the thickness t2 of the copper film (12) coating the second surface meets a condition expressed by:

$$3 \ \mu m \leq t2 \leq 6 \ \mu m.$$

## Patentansprüche

1. Mehrfachwand-Stahlrohr, das durch Wickeln eines Stahlblechs (10) gebildet ist, wobei das Stahlblech (10) gegenüberliege erste und zweite Oberflächen hat, die jeweils mit einem Kupferfilm (11, 12) durch Plattieren beschichtet sind, wobei das Stahlblech um eine Formrolle zu einem Rohr gewunden ist und die Schichten des Stahlblechs (10) durch Lösten verbunden sind, wobei der Kupferfilm (11), der die erste Oberfläche bedeckt, eine Dicke t1 hat und der Kupferfilm (12), der die zweite Oberfläche bedeckt, eine Dicke t2 hat, die größer ist als die Dicke t1, und wobei das Stahlblech (10) so gewunden ist, dass die erste Oberfläche nach außen weist,

wobei das Verhältnis der Dicke t1 zur Dicke t2 in einem Bereich liegt, der ausgedrückt wird durch die Ungleichung:

$$1/3 \leq t1/t2 \leq 2/3;$$

und

wobei die Dicke t1 der Kupferfilmbeschichtung (11) der ersten Oberfläche die folgende Bedingung erfüllt:

$$0 < t1 \leq 3 \ \mu m;$$

und

wobei die Dicke t2 der Kupferfilmbeschichtung (12) der zweiten Oberfläche die folgende Bedingung erfüllt:

$$3 \ \mu m \leq t2 \leq 6 \ \mu m.$$

2. Verwendung eines mehrwandigen Stahlrohres nach Anspruch 1 als ein Bremsrohr mit einem Druckverhältnis von 35 MPa oder darüber, für Fahrzeuge.

3. Verfahren zur Herstellung eines mehrwandigen Stahlrohr, das durch Wickeln eines Stahlblechs (10) mit kupferplattierten Oberflächen um eine Formrolle zur Bildung eines Rohrs und Verbinden der Lagen des Stahlblechs (10) durch Löten gebildet wird, wobei das Verfahren umfasst:

Vorbereiten eines Stahlblechs (10) mit einer ersten Oberfläche, die mit einem Kupferfilm (11) einer Dicke t1 beschichtet, und einer zweiten Oberfläche, die mit einem Kupferfilm (12) einer Dicke t2 beschichtet ist, die größer ist als die Dicke t1;

Winden des Stahlblechs (10) um die Formrolle zur Bildung eines Stahlrohrs, so dass die erste Oberfläche nach außen weist; und

Verbinden der Schichten des Stahlblechs (10) des Stahlrohrs durch Löten, wodurch das Stahlrohr auf eine Temperatur erhitzt wird, die nicht niedriger ist als der Schmelzpunkt des Kupfers, wobei dies in einer reduzierenden Atmosphäre erfolgt;

wobei das Verhältnis der Dicke t1 zur Dicke t2 in einem Bereich liegt, der ausgedrückt wird durch die Ungleichung:

$$1/3 \leq t1/t2 \leq 2/3;$$

und

wobei die Dicke t1 der Kupferfilmbeschichtung (11) der ersten Oberfläche die folgende Bedingung erfüllt:

$$0 < t1 \leq 3 \ \mu m;$$

und

wobei die Dicke t2 der Kupferfilmbeschichtung (12) der zweiten Oberfläche die folgende Bedingung erfüllt:

$$3 \ \mu m \leq t2 \leq 6 \ \mu m.$$

**Revendications**

1. Tube d'acier à parois multiples formé par enroulement d'une feuille d'acier (10), ladite feuille d'acier (10) ayant des première et seconde surfaces opposées respectivement revêtues de films de cuivre (11, 12) par placage, autour d'un rouleau de formage jusqu'à obtention d'un tube et par liaison des couches de la feuille d'acier (10) entre elles par brasage, dans lequel le film de cuivre (11) dont est revêtue la première surface a une épaisseur t1, le film de cuivre (12) dont est revêtue la seconde surface a une épaisseur t2 supérieure à l'épaisseur t1, et la feuille d'acier (10) est enroulée de telle sorte que la première surface est tournée vers l'extérieur,

dans lequel le rapport de l'épaisseur t1 à l'épaisseur t2 se situe dans une plage exprimée par l'inégalité suivante :

$$1/3 \leq t1/t2 \leq 2/3 \ ;$$

et

dans lequel l'épaisseur t1 du film de cuivre (11) dont est revêtue la première surface satisfait une condition exprimée par :

$$0 < t1 \leq 3 \ \mu m$$

; et

dans lequel l'épaisseur t2 du film de cuivre (12) dont est revêtue la seconde surface satisfait une condition exprimée par :

$$3 \ \mu m \leq t2 \leq 6 \ \mu m.$$

2. Utilisation du tube d'acier à parois multiples selon la revendication 1 comme tube de frein ayant une pression nominale supérieure ou égale à 35 MPa pour des véhicules.

3. Procédé de fabrication de tube d'acier à parois multiples permettant de fabriquer un tube d'acier à parois multiples formé par enroulement d'une feuille d'acier (10) ayant des surfaces à placage cuivre autour d'un rouleau de formage jusqu'à obtention d'un tube et par liaison des couches de la feuille d'acier (10) entre elles par brasage, ledit procédé comprenant les étapes suivantes :

la préparation d'une feuille d'acier (10) ayant une première surface recouverte d'un film de cuivre (11) d'une épaisseur t1 et une seconde surface recouverte d'un film de cuivre (12) d'une épaisseur t2 supérieure à l'épaisseur t1 ;
l'enroulement de la feuille d'acier (10) autour d'un rouleau de formage jusqu'à obtention d'un tube d'acier de telle sorte que la première surface est tournée vers l'extérieur ; et
la liaison des couches de la feuille d'acier (10) du tube d'acier entre elles par un brasage qui chauffe le tube d'acier à une température non inférieure au point de fusion du cuivre sous atmosphère réductrice,
dans lequel le rapport de l'épaisseur t1 à l'épaisseur t2 se situe dans une plage exprimée par l'inégalité suivante :

$$1/3 \leq t1/t2 \leq 2/3 \ ;$$

et
dans lequel l'épaisseur t1 du film de cuivre (11) dont est revêtue la première surface satisfait une condition exprimée par :

$$0 < t1 \leq 3 \ \mu m \ ;$$

et
dans lequel l'épaisseur t2 du film de cuivre (12) dont est revêtue la seconde surface satisfait une condition exprimée par :

$$3 \ \mu m \leq t2 \leq 6 \ \mu m.$$

10

11

12

15

# F I G. 1

$t_1$

10 11

$t_2$ 12

# F I G. 2

(a)

PLATED COPPER FILM

10 15 10

(b)

PLATED COPPER FILM

PLATED COPPER FILM

10 15 16 10

(c)

PLATED COPPER FILM (11+12)

10 11 15 16 10

(d)

PLATED COPPER FILM (11+12)

10 11 15 16 10

(e)

PLATED COPPER FILM (11+12)

10 11 15 16 10

# F I G. 3

**EP 2 216 108 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005095976 A
- EP 1488865 A1
- EP 0576733 A1